# EUROPEAN PATENT APPLICATION

(11) **EP 4 523 962 A1**
(43) Date of publication of application: **19.03.2025**
(21) Application number: 23803087.8
(22) Date of filing: 12.05.2023
(51) Int. Cl.: B60N 2/24, B60N 2/01, B60N 2/12, B64D 11/06, B61D 33/00

(54) **SEAT/CHAIR STRUCTURE FOR A COLLECTIVE TRANSPORT VEHICLE**

(30) Priority: 13.05.2022 ES 202230809 U
(71) Applicant: Anvecso Design S.L., 28003 Madrid (ES)
(72) Inventor: NUÑEZ VICENTE, Alejandro, 28003 Madrid (ES)
(74) Representative: Balder IP Law, S.L.
(86) International application number: PCT/ES2023/070307
(87) International publication number: WO 2023/218116

(57) **Abstract**

Structure (E) of seating/seats for transport vehicles for collective transportation, in which a longitudinal direction (L), a transverse direction (T) and a height direction (H) are defined, comprising a first seat (R1) oriented according to the longitudinal direction (L) and provided with a seat pan (S1) and a backrest (B1) located at a first level (h1) according to the height direction (H), a second seat (R2) oriented according to the longitudinal direction (L) and provided with a seat pan (S2) and a backrest (B2) located at a second level (h2) according to the height direction (H), the second seat (R2) being arranged behind according to the longitudinal direction (L) of the first seat (R1), the second level (h2) being higher than the first level (h1) so that the seat pan (S2) of the second seat (R2) is at the level of an upper section of the backrest (B1) of the first seat, the seat pan (S2) of the second seat (R2) is separated from the backrest (B1) of the first seat (R1) so that an upper aisle (UP) is created on the second level (h2) between the first seat (R1) and the second seat (R2). For use in transport vehicles for collective transportation, such as an aircraft, railway carriages or road vehicles, provided with a plurality of these structures.

## Description

### TECHNICAL SECTION

This invention relates to a structure of seating/seats for transport vehicles for collective transportation, intended to improve the use of the available space in the vehicle and at the same time improve the comfort of the passengers.

### BACKGROUND

Seating structures with several rows of seats, which are arranged on several levels, are well known for transport vehicles for groups of people.

Specifically, US 2015/0274298 A1 describes an arrangement provided with a first row of seats located at a first level and a second row of seats being arranged at a second level behind the first row of seats, the second level being higher than the first level so that the seats of the second row of seats is at the level of an upper section of the backrest of the first row of seats.

It is an arrangement intended to take advantage of the limited space available in an aircraft, and in particular to take advantage of the space not currently occupied in embodiments where all seats are at the same level.

However, it is a general solution that lacks details with regards to the structure that would allow the claimed arrangement to be implemented and that in some respects could be improved.

### DESCRIPTION OF THE INVENTION

In order to overcome the drawbacks of the technical state, this invention proposes a structure of seating/seats for transport vehicles for collective transportation, wherein a longitudinal direction, a transverse direction and a height direction are defined, comprising:
- a first seat oriented in the longitudinal direction and provided with a seat pan and a backrest located at a first level in the height direction;
- a second seat oriented in the longitudinal direction and provided with a seat pan and a backrest located at a second level in the height direction;
- the second seat being arranged behind in the longitudinal direction of the first seats, the second level being higher than the first level so that:
- the seat pan of the second seats is at the level of an upper section of the back of the first seat;
- the seat pan of the second seat is separated from the back of the first seat so that an upper aisle between the first seats and the second seats is created at the second level.

This provides a modular structure conceived as an independent module, so that by positioning successive identical structures, rows of seats at two heights can be achieved. In addition, the proposed structure achieves an optimum compromise between space occupation in the longitudinal direction and in the height direction, as no space is left unused. Specifically, all the space can be used to improve the comfort of the users, their access to the seats and, as will be seen later, also the use of space for the storage of hand luggage. In addition, as will also be seen below, it is a layout that allows for a practical implementation.

According to some embodiments, a configuration of usage is defined for each seat in which a rear edge of the seat pan is adjacent to a lower edge of the backrest and in which the seat pan of the first seat is movable between the sitting configuration and a retracted configuration in which a front edge of the seat pan is adjacent to the lower edge of the backrest, so that a lower aisle is created in front of the first seats when successive structures are arranged in the longitudinal direction, the difference in height between the second level and the first level being such that the seat pan of the first seat is arranged at a lower level than the upper aisle, so that in the retracted configuration arrangement a space is configured between the seat pan of the first seat and the upper aisle.

In other embodiments, a use-as-seat configuration is defined for each seat in which a rear edge of the seat pan is adjacent to a lower edge of the backrest and the seat pan of the first seat is movable between the use-as-seat configuration and a retracted configuration in which the seat pan has pivoted with respect to a pivot axis close to the rear edge of the seat pan, such that a lower aisle is created in front of the first seats when successive structures are arranged according to the longitudinal direction.

In some embodiments, the structure includes a cover made over the space occupied by the seat pan of the first seat when in the retracted configuration, such that the cover constitutes a footrest for the occupant of the first seat of a structure arranged behind it in the longitudinal direction.

In some embodiments, the backrest of the second seat is reclinable with respect to an axis located close to the rear edge of its seat pan.

In some embodiments, the rear edge of the seat pan of the first seats is hinged with respect to the backrest, a central section of the backrest being guided by a guide that has a vertical component, the lower edge of the backrest being able to move horizontally and the seat being able to move from the position of use as a seat pan to a forward position in the longitudinal direction with respect to the configuration of sitting, so that the seat can adopt a semi-recumbent semi-reclined configuration.

In some embodiments, the seat pan of the first row of seat comprises a rear extension that extends vertically so as to constitute a pushing element of the lower section of the
respective backrest, which allows the seat pan/backrest assembly to be brought into the semi-lying configuration.

In some embodiments, the means of movement in the longitudinal direction of the chair comprises two sets of double telescopic guides anchored on a support plate.

In some embodiments, the structure comprises one or more first seat in a row and/or one or more second seat in a row.

In some embodiments, the structure comprises two lateral support plates extending according to planes defined by the longitudinal and height directions.

In some embodiments, the structure comprises on the second level a support plate that extends according to a plane defined by the longitudinal and transverse direction, and joined to the lateral support plates, so as to form the upper aisle.

In some embodiments, the lateral support plates comprise steps arranged between the first level and the second level and substantially below the vertical height of the upper aisle, so as to form access steps.

In some embodiments, the structure comprises a support plate for the seat pans of the first row of seats, this support plate being attached to the side support plates.

In some embodiments, the structure comprises a transverse plate contained in the plane defined by the transverse and height directions, arranged behind the first row of seats, the transverse plate being preferably inclined forward in its lower section.

In some embodiments, the backrest guides of the first row of seats are attached to the transverse plate.

In some embodiments, the side support plates comprise a lower rear cutout, so as to widen the lower aisle.

In some embodiments, the lower rear cutout extends in the longitudinal direction to lie appreciably below the upper aisle, so as to form the lower step.

In some embodiments, the support plate comprises a cutout at its ends and the side support plates comprise a cutout below the level of the support plate, so as to form the upper step.

In some embodiments, the structure comprises luggage storage spaces arranged under the seats, the upper space being accessible from the side aisles running along the longitudinal direction, and the lower space accessible from the lower aisle individually under each seat.

In some embodiments, the structure comprises luggage storage spaces arranged under the seats of the upper volume, these being accessible from each of the upper seats and storage spaces in front of the seats of the lower row (when several structures follow one another).

In some embodiments, the backrests have/include headrests at their upper end.

In some embodiments, the structure comprises screens installed in the upper extension of the transverse plate in the height direction and screens installed behind the lower section of the backrests of the upper row seats.

In some embodiments, the structure comprises raised handholds on one or both sides of the upper aisle, preferably arranged on the side support plates.

In other embodiments, the structure comprises:
- two seats in the first row;
- three seats in the second row.

In these other embodiments, a space for the passenger's feet can be provided in front of each of the seats in the second row, so that each successive pair of seats is arranged on either side of the backrests of the first seats.

Preferably, according to these variants, the structure comprises a horizontal extension between the first two seats constituting a table and/or a vertical separating element between the first two seats.

Advantageously, a screen support for each of the second seats can be provided in the upper extension of the structures of the seats in front.

Finally, according to these variants, between each pair of second seats and in the rear part, some rear housings can be provided to accommodate the screens intended for each of the occupants of the first seats of a second identical structure arranged behind.

The different aspects and embodiments of the invention defined above can be combined with each other, provided that they are mutually compatible. Additional advantages and features of the invention will become apparent from the following detailed description and will be pointed out particularly in the appended claims.

### BRIEF DESCRIPTION OF THE DRAWINGS

To complement the description and in order to help a better understanding of the features of the invention, in accordance with some examples of practical embodiments of the invention, there is attached as an integral part of the description, a set of figures in which, with illustrative and not limiting character, the following has been represented:
Figure 1 shows a front perspective of a structure or monument according to the invention.
Figure 2 is a side elevation view showing the relative arrangement between upper and lower rows.
Figure 3 shows the consecutive arrangement of two structures according to the invention.
Figure 4 shows a row of three seats, corresponding to the lower row, with each of the seat pans shown in a different configuration.
Figure 5 is analogous to figure 4, but with a different perspective viewpoint.
Figure 6 is a rear perspective of a lower row of seats, showing the cover of the front seat pan storage space or footrest.
Figure 7 is a rear perspective showing the three configurations of lower row seats with their possible mechanisms.
Figures 8 and 9 are front and rear perspectives of an arrangement in which the upper row access steps are implemented by cutouts in the side support plates.
Figure 10 is a side elevation, with the side plate/cover removed, so that the relative arrangement of the rows and the formation of the space between the footrest and the floor of the upper row can be appreciated.
Figure 11 is analogous to figure 10 but with the side plate/cover.
Figures 12 to 16 and 22 to 23 show a lightened structure arrangement in which it is noted that the chairs of the first row can pivot upwards.
Figures 17 to 21 show an arrangement in which the lower row comprises two seats while the upper row comprises three seats.

### DESCRIPTION OF A PREFERRED ARRANGEMENT OF THE INVENTION

In the description of possible preferred embodiments of the invention it is necessary to give numerous details in order to give a better understanding of the invention. However, it will be apparent to the expert in this field that the invention can be implemented without these specific details. On the other hand, well-known features have not been described in detail to avoid unnecessarily complicating the description.

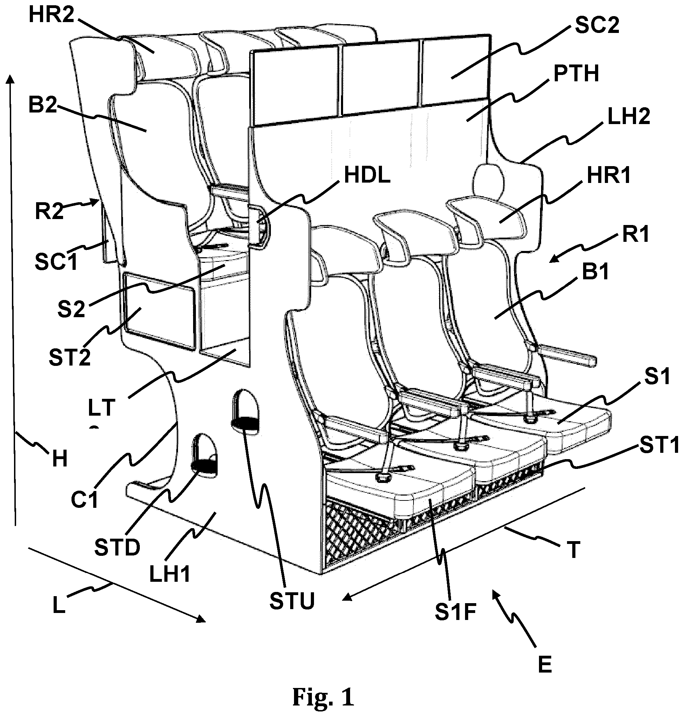

Figure 1 shows a structure according to a first embodiment of the invention. In this invention, the term monument will also be used, as a synonym for structure.

To facilitate the description of the components of the structure, first of all are defined a longitudinal direction L, a transverse direction T and a height direction H. Generally, the longitudinal direction will coincide with the longitudinal direction of the vehicle itself, i.e. of displacement, of the aircraft, railroad or road vehicle, to which the invention will be applied.

Thus, the monument comprises:
- a first seat R1 oriented according to the longitudinal direction L and provided with a seat pan S1 and a backrest B1 located at a first level h1 according to the height direction H; and.
- a second seat R2 oriented according to the longitudinal direction L and provided with a seat pan S2 and a backrest B2 situated at a second level h2 according to the height direction H.

By levels, in this invention, reference is made to the level at which the floor of each row is located. Generally, the difference in levels will be maintained between equivalent elements of the lower front and upper rear rows.

As can be seen, the mentioned levels are such that the second seat R2 is arranged behind, according to the longitudinal direction L, the first seat R1, the second level h2 being higher than the first level h1 so that:
- the seat pan S2 of the second seat R2 is at the level of an upper section of the backrest B1 of the first seat R1;
- the seat pan S2 of the second seat R2 is separated from the backrest B1 of the first seat R1 so that an upper aisle UP is defined on the second level h2 between the first seat R1 and the second seat R2;

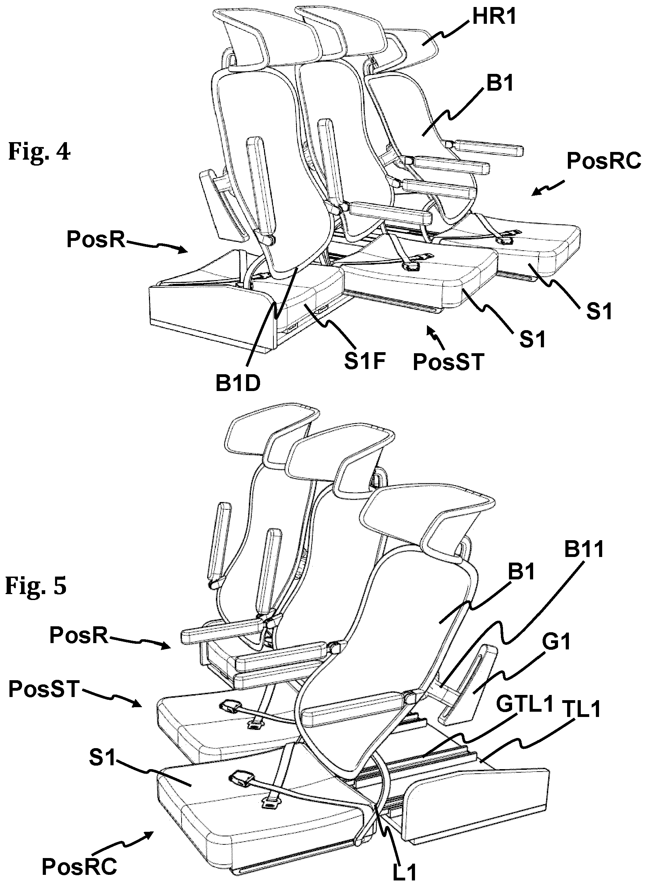

As can be seen for example in Figures 4 and 5, for each seat a use configuration PosST is defined as a seat pan in which a rear edge of the seat pan S1, S2 is adjacent to a lower edge of the backrest B1, B2. By configuration of use is to be understood herein as one in which the passenger is seated. It is important to distinguish this configuration from the other two extreme configurations that can be adopted by the seat R1, i.e. hidden or retracted seat pan PosR or fully extended seat pan in "*chaise longue*" position, in which the seat pan is fully forward PosRC.

In all embodiments, and as can be seen for example in Figures 4 and 5, the seat pan S1 of the first seat R1 is transferable between the use configuration PosST and a retracted configuration PosR in which a front edge S1F of the seat pan S1 is adjacent to the lower edge B1D of the backrest B1.

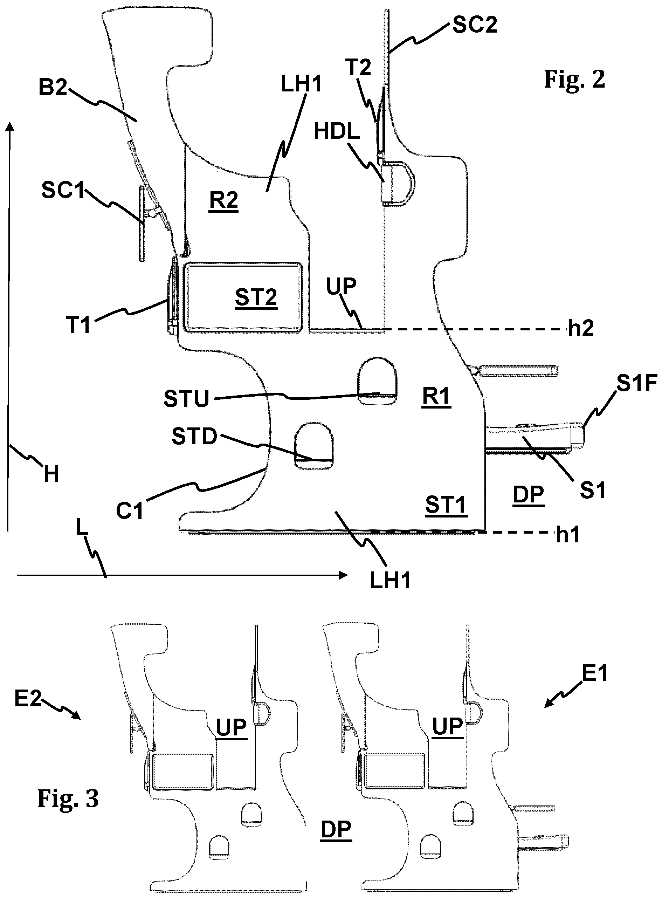

In this way, a lower passageway DP is created in front of the first seat R1 when successive structures E1, E2 are arranged according to the longitudinal direction L, as can be seen in Figure 3.

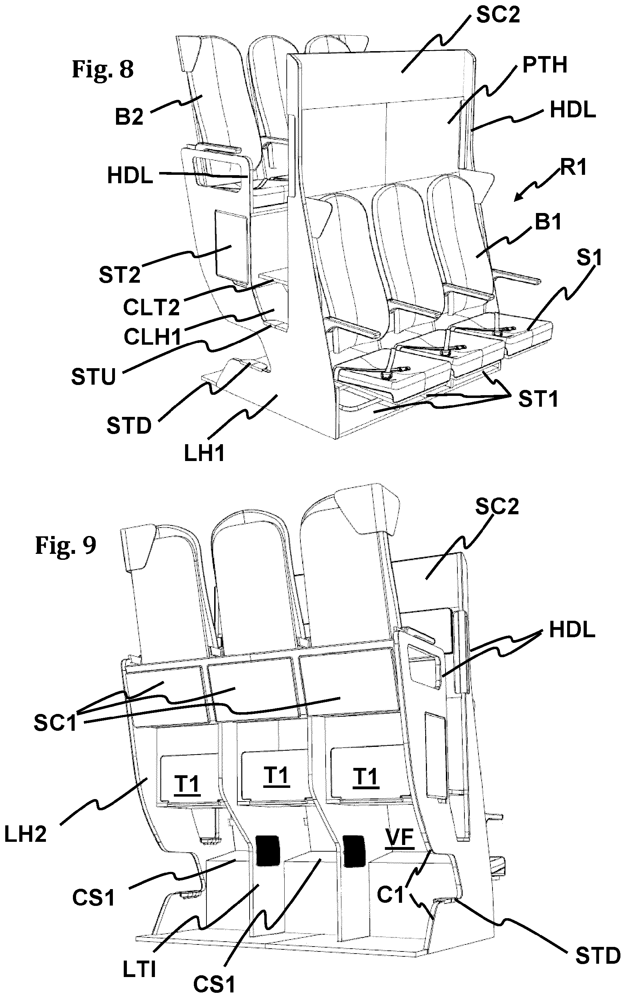

Furthermore, according to the invention, the difference in heights between the second level h2 and the first level h1 is such that the seat pan S1 of the first seat R1 is arranged at a lower level than the upper aisle UP, so that in the retracted configuration PosR a volume VF is configured between the seat pan S1 of the first seat
R1 and the upper aisle UP, as can be seen in figure 9.

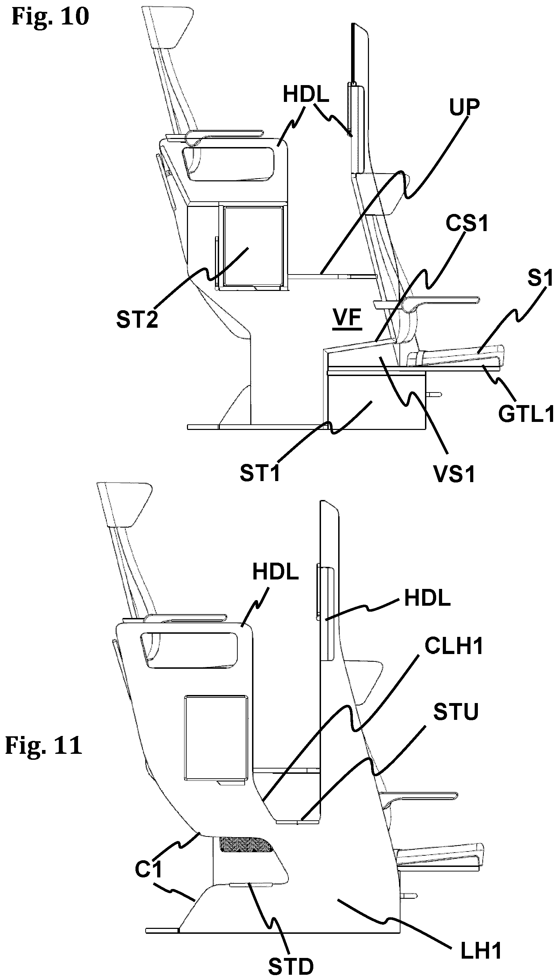

The monument, as shown in Figure 10, comprises a cover CS1 made over the space VS1 occupied by the seat pan S1 of the first seat R1 when it is in the retracted configuration PosR. This cover has two functions. Firstly, it constitutes a footrest for the occupant of the first seat R1 of a structure E2 arranged behind according to the longitudinal direction L, and secondly, it serves as a housing for the seat pan S1 when it is retracted.

With respect to the upper row R2 of the monument, the backrests B2 are reclinable with respect to an axis located in proximity to the rear edge of its seat pan S2, and it is not envisaged that the seat pan is movable. This is because the location of the backrest B2 in height allows it to pivot above the clear height of the lower aisle DP, and it is not necessary to move or retract the seat to create the aisle UP.

The rear edge of the seat pan S1 of the first seat R1 is hinged with respect to the backrest B1. By articulated it is to be understood that both are mechanically linked. A central section of the backrest, for this purpose provided with extensions B11 referred to in figure 5, is guided by means of a guide G1 that has a vertical component. That is to say, the guide can be either vertical or inclined. The essential thing is that it allows the backrest section to be guided vertically, although the backrest will also be provided with a rotation, so that the lower edge of the backrest B1 can be moved horizontally. Thus, seat pan S1, in its movement from the position of use PosST to a forward position PosRC in the longitudinal direction L with respect to the configuration of use as a seat and thanks to the aforementioned link with the backrest B1, will lead the armchair to adopt a semi-recumbent semi-reclined configuration PosRC.

As shown in Figure 5, this linkage is preferably implemented by means of a rear extension L1 of the seat pan S1 of the first row of seat R1, which extends vertically so as to constitute a push/pull element of the respective lower backrest section B1, which allows bringing the seat pan/backrest assembly S1/B1 into the semi-recumbent semi-reclined configuration PosRC.

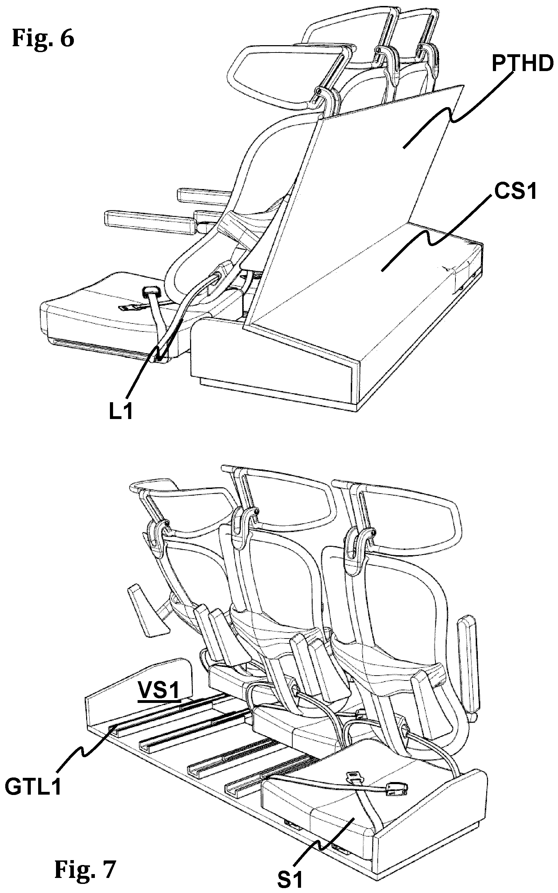

The seat pan S1 can be mounted in translation by means of any suitable guide system, but it is preferred that it is mounted by means of two sets of double telescopic guides GTL1 anchored on a support plate TL1, as shown in Figure 7.

In the described embodiments, the monument comprises two lateral support plates LH1, LH2 extending according to planes defined by the longitudinal L and height H directions. These lateral support plates are complemented by intermediate support plates.

As can be seen, for example, in Figure 1, the monument comprises at the second level h2 a support plate LT2 extending according to a plane defined by the longitudinal direction L and transverse direction T, and joined to the lateral support plates LH1, LH2, so as to form the upper passage UP.

As can be seen in Figure 1, the lateral support plates LH1, LH2 comprise steps STD, STU arranged between the first level h1 and the second level h2 and substantially below the vertical height of the upper walkway UP, so as to constitute access steps. These steps may be formed by cutouts in the form of openings, or by cutouts CLT2 below the level of the support plate LT2, as shown in Figure 8.

Another function of the lateral support plates LH1, LH2, as well as of the intermediate ones LTI, is to support the support plate TL1 of the seat pans S1 of the first row of seats R1, as shown in figure 5.

Also provided is a cross plate PTH contained in the plane defined by the transverse directions T and height H, arranged behind the first row of seats R1, the cross plate PTH being preferably inclined forward in its lower section PTHD, as shown in figure 6. The section PTH forms a part of the support plate.

In all embodiments shown, the side support plates LH1, LH2 comprise a lower rear cutout C1, so as to configure a widening of the lower aisle DP, which allows greater mobility to the user. In the arrangement shown in Figures 8 and 9, the lower rear cutout C1 extends in the longitudinal direction to lie appreciably below the upper aisle, so as to configure the lower step STD.

Another advantage of the invention is that it allows the fitting of luggage storage spaces ST1, ST2 arranged under the seat pans S1, S2. The upper space ST2 is accessible from the side aisles running along the longitudinal direction L, and the lower space ST1 is accessible from the lower aisle DP individually under each seat pan S1.

These storage spaces can also be located directly accessible from each seat of the upper volume, and in front of the seats of the lower volume.

The monument can be completed with auxiliary elements such as headrests HR1, HR2 at the upper end of the backrests, screens SC2 arranged in the upper extension of the transverse plate PTH, screens SC1 arranged behind the lower section of the backrests B2 of the upper row seats R2, trays T1, T2 for the passengers and handles HDL raised on one or both sides of the upper aisle UP, all easily appreciable in figures 8 and 9.

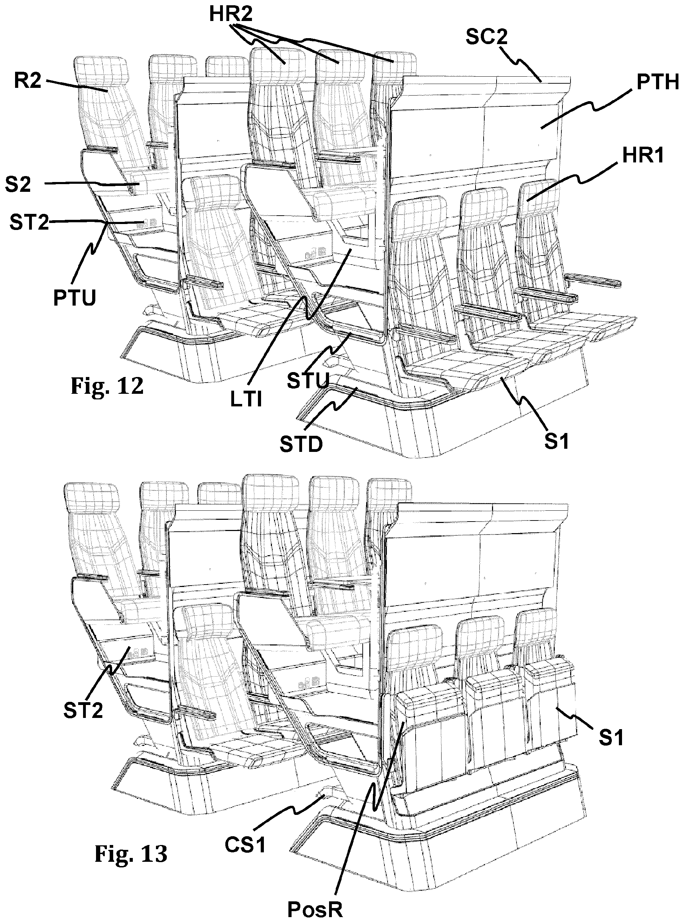

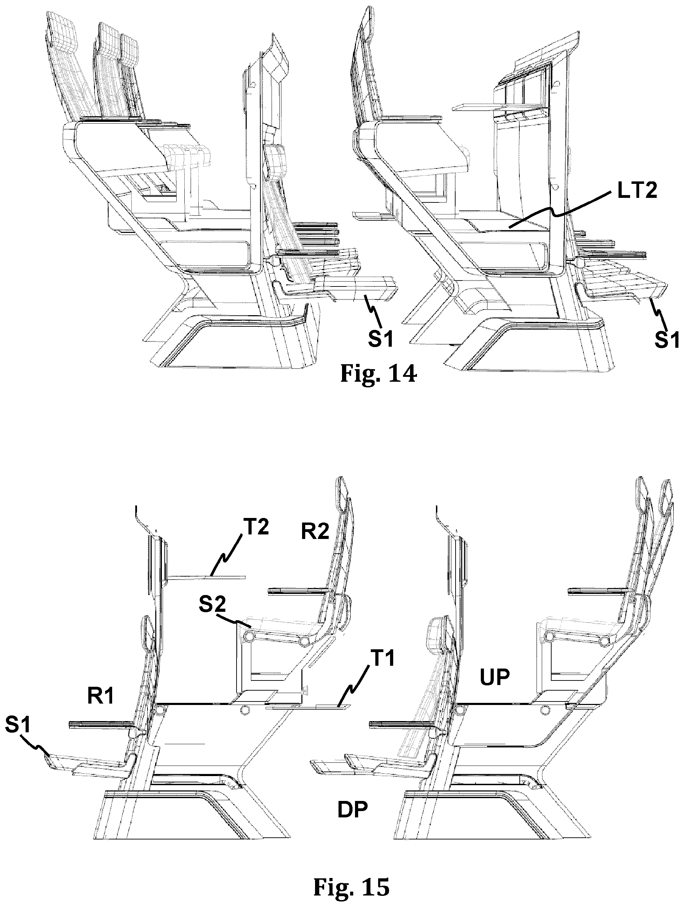

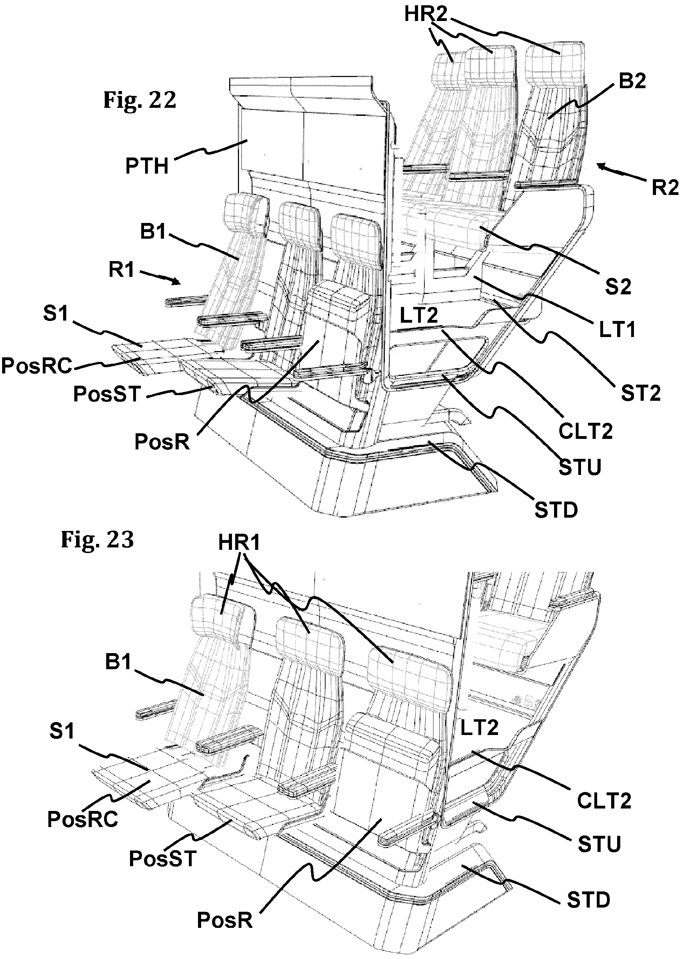

Figures 12 to 16 and 22 to 23 show an arrangement of the structure E and E2 according to the invention, which is characterized in that it does not comprise lateral closing plates, but only comprises two intermediate plates LTI as vertical structural elements, and so is suitably lightened.

The structure further comprises a rear inclined plate PTU which forms part of the support structure of the second seats R2, the rear plate PTU being preferably inclined at about 45°, and preferably extending from the height at which the seat pan S1 of the first seat R1 is located to the height at which the seat pan S2 of the second seat R2 is located. This plate has the additional function of contributing to the formation of a storage space ST2 for suitcases under the seat pans S2 of the second seats R2.

It could also be conceivable, in other embodiments, that the rear plate PTU is only inclined in its lower section to rise vertically when it is at the vertical of the edge of the seat pan S2 of the second (upper) seat R2, so that the space intended for the storage of luggage according to the arrangement shown would constitute a free space arranged before the passengers of the first seats of an identical rear structure E2, giving them a superior living space.

In other embodiments, the PosR position of the seat pan S1, could be achieved by a pivot towards the top, as shown in Figures 13, 22 and 23.

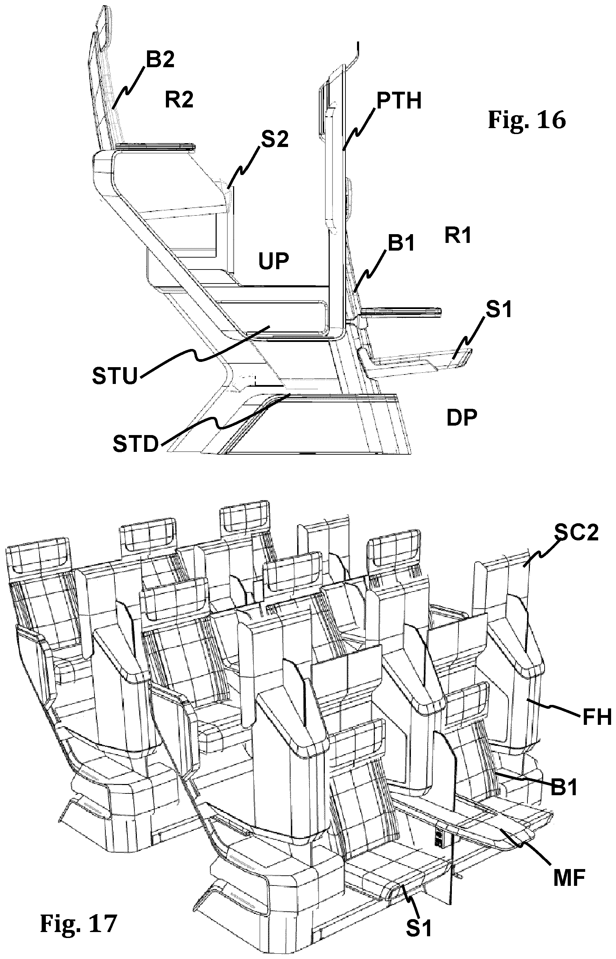

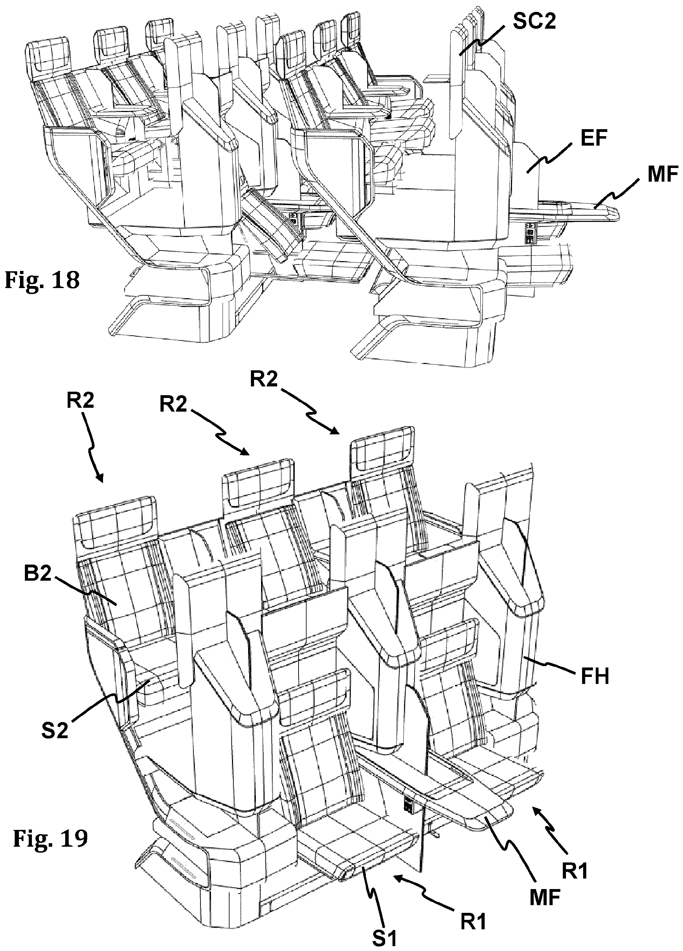

Figures 17 to 21 show another arrangement consisting in arranging two first seats R1 and three second seats R2 in the same structure. In this way a module or monument is created that provides two types of seats.

Thus, this arrangement makes it possible to provide in front of each of the seats R2 of the second row a space FH intended for the passenger's feet, so that each pair of successive housings FH is arranged on each side of the backrests B1 of the first seats R1. Preferably, a display support SC2 for each of the second seats R2 can be installed in the upper extension of the housings FH.

And as regards the lower row, a horizontal extension constituting a table MF and/or a vertical separation element EF can be provided between the first two seats R1.

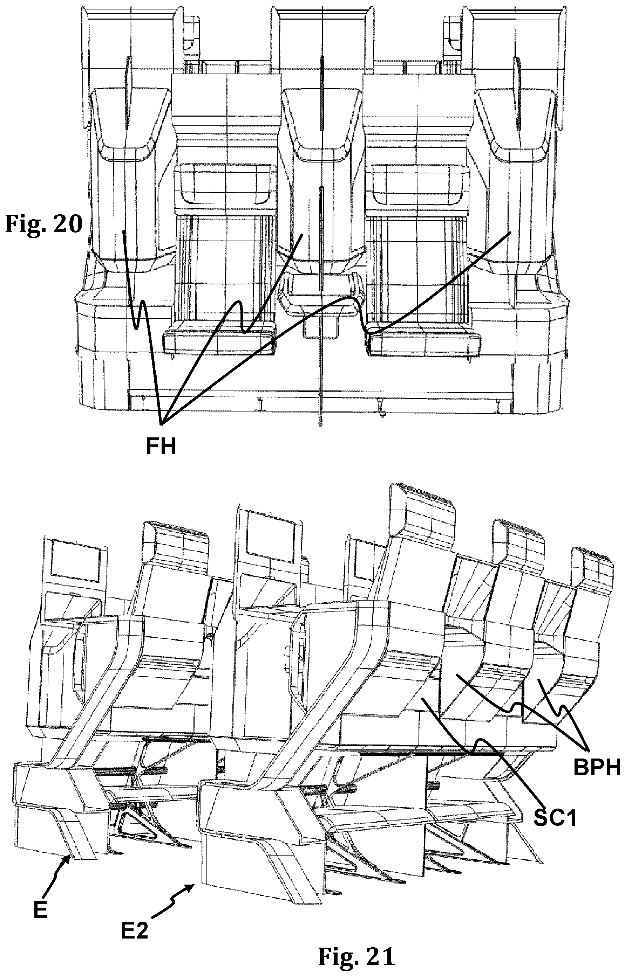

It can also be appreciated in Figure 21, that there is space at the rear between each pair of second seats R2 for some rear housings BPH for mounting the screens SC1 intended for each of the occupants of the first seats R1 of a second identical structure E2 arranged behind.

In view of this description and associated figures, the expert in this field may understand that the invention has been described according to some preferred embodiments, but that multiple variations may be introduced in said preferred embodiments, without departing from the object of the invention as claimed.

In this text, the term "comprises" and its derivations (such as "comprising", etc.) should not be understood in an exclusive sense. That is, these terms should not be interpreted as excluding the possibility that what is described and defined may include more elements, stages, etc.

## Claims

1. Structure (E) for seating/seats for transport vehicles for collective transportation, in which a longitudinal direction (L), a transversal direction (T) and a height direction (H) are defined, comprising:
- a first seat (R1) oriented according to the longitudinal direction (L) and provided with a seat pan (S1) and a backrest (B1) located at a first level (h1) according to the height direction (H);
- a second seat (R2) oriented in the longitudinal direction (L) and provided with a seat pan (S2) and a backrest (B2) located at a second level (h2) according to the height direction (H);
the second seat (R2) being arranged behind according to the longitudinal direction (L) of the first seat (R1), the second level (h2) being higher than the first level (h1) so that:
- the seat pan (S2) of the second seat (R2) is at the level of an upper section of the backrest (B1) of the first seat;
- the seat pan (S2) of the second seat (R2) is separated from the backrest (B1) of the first seat (R1) so that an upper aisle (UP) is created on the second level (h2) between the first seat (R1) and the second seat (R2).

2. Structure (E) according to claim 1, wherein a use configuration (PosST) is defined for each seat as a seat in which a rear edge of the seat pan (S1, S2) is adjacent to a lower edge of the backrest (B1, B2), wherein:
- the seat pan (S1) of the first seat (R1) is transferable between the sitting use configuration (PosST) and a retracted configuration (PosR) in which a front edge (S1F) of the seat pan (S1) is adjacent to the lower edge of the backrest (B1), so that a lower aisle (DP) is created in front of the first seat (R1) when successive structures (E1, E2) are used in the longitudinal direction (L), the difference in height between the second level (h2) and the first level (h1) being such that the seat pan (S1) of the first seat (R1) is arranged at a lower level than the upper aisle (UP), so that in the retracted configuration (PosR) a space (VF) is created between the seat pan (S1) of the first seat (R1) and the upper aisle (UP); or
- the seat pan (S1) of the first seat (R1) is movable between the in-use sitting configuration (PosST) and a retracted configuration (PosR) in which the seat pan (S1) has pivoted with respect to a pivot axis arranged close to the rear edge of seat pan (S1), so that a lower aisle (DP) is created in front of the first seat (R1) when successive structures (E1, E2) are arranged in the longitudinal direction (L).

3. Structure according to claim 2 comprising a cover (CS1) arranged over the space (VS1) occupied by the seat pan (S1) of the first seat (R1) when in the retracted configuration (PosR), so that the cover (CS1) constitutes a footrest for the occupant of the first seat (R1) of a structure (E2) arranged behind according to the longitudinal direction (L).

4. Structure according to any one of the preceding claims, wherein the backrest (B2) of the second seat (R2) is reclinable with respect to an axis located in proximity to the rear edge of its seat pan (S2).

5. Structure according to any of the preceding claims, wherein the rear edge of the seat pan (S1) of the first seat (R1) is articulated with respect to the backrest (B1), a central section of the backrest being guided by a guide (G1) having a vertical component, the lower edge of the backrest (B1) being horizontally movable and the seat pan (S1) being movable from the position of sitting use (PosST) to a forward position (PosRC) according to the longitudinal direction (L) with respect to the configuration of use as a seat, so that the seat can adopt a semi-recumbent semi-reclined configuration (PosRC).

6. Structure according to claim 5, in which the seat pan (S1) of the first row of seats (R1) comprises a rear extension (L1) that extends vertically so that it constitutes a push/pull element of the lower section of the respective backrest (B1), which allows the seat pan/backrest assembly (S1/B1) to be brought to the semi-reclined configuration (PosRC).

7. Structure according to any of the preceding claims, in which the means of movement in the longitudinal direction (L) of the seat pan (S1) comprise two sets of double telescopic guides (GTL1) anchored on a support plate (TL1).

8. Structure according to any of the preceding claims, comprising one, two or more first seats (R1) and/or one, two or more second seats (R2).

9. Structure according to any of the preceding claims, comprising two lateral support plates (LH1, LH2) that extend along planes defined by the longitudinal (L) and height (H) directions.

10. Structure according to claim 9, comprising on the second level (h2) a support plate (LT2) that extends along a plane defined by the longitudinal (L) and transverse (T) direction, and joined to the lateral support plates (LH1, LH2), so that it forms the upper corridor (UP).

11. Structure according to claim 9, in which the side support plates (LH1, LH2) comprise steps (STD, STU) arranged between the first level (h1) and the second level (h2) and substantially below the vertical of the upper corridor (UP), so that they constitute access steps.

12. Structure according to claim 10, comprising a support plate (TL1) for the seat pans (S1) of the first row of seats (R1), this support plate (TL1) being connected to the side support plates (LH1, LH2).

13. Structure according to claim 7 and claim 10, comprising a transverse plate (PTH) contained in the plane defined by the transverse (T) and height (H) directions, arranged behind the first row of seats (R1), the transverse plate (PTH) preferably being inclined forward in its lower section (PTHD).

14. Structure according to claim 13 and claim 5, wherein the guides (G1) of the backrests (B1) of the first row of seats (R1) are attached to the cross plate (PTHD).

15. Structure according to claim 9, wherein the side support plates (LH1, LH2) comprise a lower rear cutout (C1), such that a widening of the lower passageway (DP) is configured which improves access.

16. Structure according to claim 15, in which the lower rear cut-out (C1) extends in the longitudinal direction until it is substantially below the upper aisle (UP), such that it configures the lower step (STD).

17. Structure according to claim 10 and claim 16, wherein the support plate (LT2) comprises a cutout (CLT2) at its ends and the side support plates (LH1, LH2) comprise a cutout (CLH1) below the level of the support plate (LT2), so that the upper step (STU) is configured.

18. Structure according to any of the preceding claims, comprising luggage storage spaces (ST1, ST2) arranged under the seat pans (S1, S2), the upper space (ST2) being accessible from the side aisles running along the longitudinal direction (L), and the lower space (ST1) being accessible from the lower aisle (DP) individually under each seat pan (S1).

19. Structure according to any of the preceding claims comprising luggage storage spaces arranged under the seats of the upper space (ST2), these being accessible from each of the upper seats (S2) and storage spaces (ST1) located in front of the seats of the lower row (S1) (when several structures follow one another).

20. Structure according to any of the preceding claims, wherein the backrests (B1, B2) comprise headrests (HR1, HR2) at their upper end.

21. Structure according to claim 13, comprising screens or screen supports (SC2) arranged in the upper extension of the transverse plate (PTH) according to the height direction (H) and screens (SC1) arranged behind the lower section of the backrests (B2) of the seats in the upper row (R2).

22. Structure according to claim 9, comprising raised handles (HDL) on one or both sides of the upper aisle (UP).

23. Structure according to any of the preceding claims in which the seat pan (S1) pivots on its rear axis to reach a vertical retracted position (PosR).

24. Structure according to claim 8 or any dependent claim, comprising:
- two seats (R1) in the first row;
- three seats (R2) in the second row.

25. Structure according to claim 24, comprising a space (FH) for the passenger's feet arranged in front of each of the seats (R2) of the second row, such that each successive pair of spaces (FH) are arranged on respective sides of the backrests (B1) of the first seats (R1).

26. Structure according to claim 24 or 25, comprising a horizontal extension constituting a table (MF) and/or a vertical separation element (EF) between the first two seats (R1).

27. Structure according to any of the preceding claims, comprising a rear inclined plate (PTU) that forms part of the support structure of the second seats (R2), the rear inclined plate (PTU) preferably being inclined at about 45°, and preferably extending from the height at which the seat pan (S1) of the first seats (R1) is located to the height at which the seat pan (S2) of the second seats (R2) is located.

28. Structure according to any of claims 25 to 27, comprising, in the upper extension of the housings (FH), a screen support (SC2) for each of the second seats (R2).

29. Structure according to the first claim, in which the space arranged under the support of the seat pans (S2) of the second seats (R2) is free.

30. Structure according to any of claims 24 to 25, comprising between each pair of second seats (R2) and in the rear part, rear housings (BPH) to accommodate the respective screens (SC1) intended for each of the occupants of the first seats (R1) of a second identical structure (E2) arranged behind.

31. For use in aircraft, railway carriages or road vehicles provided with a plurality of structures according to any of the preceding claims.
